# EUROPÄISCHE PATENTSCHRIFT

(11) **EP 2 261 097 B1**
(45) Veröffentlichungstag und Bekanntmachung des Hinweises auf die Patenterteilung: **27.04.2011**
(21) Anmeldenummer: 09007520.1
(22) Anmeldetag: 08.06.2009
(51) Int. Cl.: B61D 17/20

(54) **Gliederbrücke eines Übergangs zwischen zwei gelenkig miteinander gekuppelten Fahrzeugen**
Section bridge for the passage between two articulated vehicles
Pont articulé d'un passage entre deux véhicules couplés de manière articulée

(43) Veröffentlichungstag der Anmeldung: 15.12.2010
(73) Patentinhaber: Hübner GmbH, 34123 Kassel (DE)
(72) Erfinder: Jünke, Volker, 34587 Felsberg (DE)
(74) Vertreter: Walther, Walther & Hinz GbR

(56) Entgegenhaltungen:
- EP-A- 0 583 491
- BE-A- 655 628
- DE-B- 1 018 446
- DE-C- 947 078
- US-A- 4 579 063

## Beschreibung

Die vorliegende Erfindung betrifft einen Übergang mit einer Gliederbrücke zwischen zwei gelenkig miteinander gekuppelten Fahrzeugen.

Gliederbrücken sind aus dem Stand der Technik hinreichend bekannt. So ist z. B. aus EP 583 491 B1 eine Gliederbrücke bekannt, bei der in den gelenkig miteinander verbundenen Fahrzeugen im Bereich des Bodens gelenkig miteinander verbundenen Fahrzeugen im Bereich des Bodens jeweils eine Einschuböffnung vorgesehen ist, in der die Gliederbrücke parallel zur Fahrzeuglängsachse beweglich gelagert ist. Die Gliederbrücke selbst wird hierbei zwischen den beiden Fahrzeugen dadurch zentriert, dass an jedem Ende der Gliederbrücke eine Blattfeder vorgesehen ist, die sich einerseits am Gehäuse des Fahrzeugs abstützt, und zum anderen an der Gliederbrücke anliegt. Durch die Blattfedern wird nunmehr - wie bereits ausgeführt - dafür gesorgt, dass sich die Gliederbrücke bei Bewegung der beiden Fahrzeuge relativ zueinander immer in einer etwa mittigen Position befindet. Wie bereits ausgeführt, ist die Gliederbrücke in der Einschuböffnung eines jeden Fahrzeugs längs beweglich geführt. Hierdurch ist es möglich, dass bei Versatzbewegungen der beiden Fahrzeuge relativ zueinander, wie sie beispielsweise vorkommen, wenn die Fahrzeuge über eine S-förmige Weiche fahren, die Gliederbrücke dem hierbei auftretenden Bewegungsablauf durchaus nachgeben kann. Insbesondere ist festzuhalten, dass eine Gliederbrücke eine Schrägstellung, d. h. eine Auslenkung zur Längsachse des Fahrzeugs um 45° bewerkstelligen kann.

Wie bereits ausgeführt, besitzen die Fahrzeuge zur Aufnahme der Gliederbrücke jeweils eine sogenannte Einschuböffnung. Es sind nun allerdings auch Fahrzeuge bekannt, bei denen eine solche Einschuböffnung nicht vorgesehen ist. Das heißt, dass sich der Raum für die Gliederbrücke um die Tiefe der jeweiligen Einschuböffnung in dem jeweiligen Fahrzeug vermindert. Die Einschuböffnung selbst besitzt eine Tiefe von etwa 300 mm, wobei bei einer solchen Tiefe - wie bereits ausgeführt - eine Schrägstellung der Gliederbrücke von etwa 45° parallel zur Längsachse erfolgen kann. Ist die Lagerung der Gliederbrücke in solchen Einschuböffnungen nicht möglich, sondern wird die Gliederbrücke unmittelbar mit ihren Enden an die Stirnseiten der beiden gelenkig miteinander verbundenen Fahrzeugen angekoppelt, dann ist eine Schrägstellung nur noch von maximal 30° relativ zur Längsachse des Fahrzeugs möglich. Das heißt, Querversatzbewegungen, wie sie auftreten, wenn ein solches Fahrzeug über eine Weiche fährt, sind mit einer solchen Konstruktion nur noch dann möglich, wenn die Verschwenkung der Gliederbrücke nicht 30° übersteigt, oder aber die Gliederbrücke wird vom Fahrzeug entkoppelt.

Die der Erfindung zugrunde liegende Aufgabe besteht demzufolge darin, eine Gliederbrücke zu schaffen, die unmittelbar an den Stirnseiten der Fahrzeuge angebracht werden kann, ohne in den Fahrzeugen entsprechende Einschuböffnungen vorzusehen, mit der aber dennoch Schwenkwinkel der Gliederbrücke relativ zur Längsachse des Fahrzeugs von 45° erzielbar sind.

Die Aufgabe wird erfindungsgemäß dadurch gelöst, dass die Gliederbrücke eines Übergangs zwischen zwei gelenkig miteinander gekuppelten Fahrzeugen zu beiden Enden einen Gehäuseschlitten aufweist, wobei mindestens einer der Gehäuseschlitten quer zur Längsachse des Fahrzeugs verschieblich durch das Fahrzeug aufnehmbar ist. Vorzugsweise ist jedoch vorgesehen, dass der Gehäuseschlitten, in dem die Gliederbrücke mit ihrem Ende lagert, zu beiden Seiten der Gliederbrücke durch das jeweilige Fahrzeug verschieblich aufnehmbar ist. Insbesondere bei Querversatzbewegungen ist somit die Gliederbrücke in der Lage, den hierbei auftretenden Fahrbewegungen durch Verschieben der Gliederbrücke parallel zur Querachse des Fahrzeugs nachgeben zu können, ohne dass eine Auslenkung der Gliederbrücke um einen Winkel von mehr als 45° zur Längsachse des Fahrzeugs erforderlich ist.

Vorteilhafte Merkmale und weitere Ausbildungen ergeben sich aus den Unteransprüchen.

So ist insbesondere vorgesehen, dass zur verschieblichen Aufnahme des Gehäuseschlittens eine an dem Fahrzeug angeordnete Führungseinheit vorgesehen ist. Die Führungseinheit zur verschieblichen Aufnahme des Gehäuseschlittens der Gliederbrücke umfasst mindestens eine, vorzugsweise jedoch zwei parallel zueinander verlaufende Rollenschienenführungen. Solche Rollenschienenführungen sind nach Art von Schwalbenschwanzführungen ausgebildet, und lassen demzufolge eine Bewegung parallel zur Längsachse der Rollenschienen zu. Ein Abheben ist aufgrund der Ausbildung nach Art einer Schwalbenschwanzführung nicht möglich. Des Weiteren ist vorgesehen, dass die mindestens eine Rollenschienenführung auf einer am Fahrzeug angeordneten Traverse angeordnet ist.

Um sicherzustellen, dass der Gehäuseschlitten nach einer Auslenkung immer wieder eine im Wesentlichen mittige Lage einnimmt, sind zu beiden Seiten Federelemente vorgesehen, die für eine Zentrierung des Gehäuseschlittens auf der Traverse sorgen.

Um darüber hinaus sicherzustellen, dass der Gehäuseschlitten nur bei Überschreiten einer bestimmten auf den Gehäuseschlitten bzw. die Gliederbrücke wirkende Kraft entgegen der Kraft der Federelemente ausgelenkt wird, befindet sich unterhalb des Gehäuseschlittens an der Traverse eine sogenannte Losbrecheinrichtung. Eine solche Losbrecheinrichtung umfasst ein federbelastetes Halteglied, z. B. eine Kugel oder einen Stift mit einem Kugelkopf, der in eine entsprechende Aufnahme in dem Gehäuseschlitten oder in der Traverse federbelastet hineinragt. Hieraus wird deutlich, dass dann, wenn die Kraft zum Verschieben des Gehäuseschlittens auf der Traverse einen bestimmten Wert überschreitet, das federbelastete Halteglied, z. B. eine Kugel, in Richtung der Feder ausweicht und den Gehäuseschlitten zur Verschiebung freigibt. Eine solche Losbrecheinrichtung sorgt insofern dafür, dass die Gliederbrücke bei normalen Fahrbewegungen, also auch bei Querversatz von unter 30°, nicht labil wird.

Des Weiteren ist vorgesehen, dass die Gliederbrücke in dem Gehäuseschlitten entgegen der Kraft einer Feder, insbesondere eine Blattfeder, parallel zur Fahrzeuglängsachse beweglich gelagert ist. Hieraus wird deutlich, dass der Gehäuseschlitten die Aufgabe übernimmt, die zuvor beim Stand der Technik die Gehäuseöffnung in dem Fahrzeug selbst übernommen hat. Die Gliederbrücke, die Gleit- und Trittglieder umfasst, ist derart ausgebildet, dass die Gleit- und Trittglieder quer zur Längsachse des Fahrzeugs in Rahmenschlitten angeordnet sind. Denkbar ist aber auch die Anordnung der Gleit- und Trittglieder parallel zur Längsachse.

Um eine Stufe von der eigentlichen Gliederbrücke zum Boden des Fahrzeugs zu vermeiden, sind sogenannte Brückenbleche vorgesehen, die mittels Scharnier am Fahrzeug einerseits befestigt sind, und mit ihrem anderen Ende auf der Gliederbrücke relativ zur Gliederbrücke beweglich lagern.

Anhand der Zeichnungen wird die Erfindung nachstehend beispielhaft näher erläutert.
- Figur 1: zeigt die Gliederbrücke in einer perspektivischen Ansicht, wobei die Fahrzeugteile lediglich schematisch angedeutet sind.;
- Figur 2: zeigt die Losbrecheinrichtung als Mittel zur Fixierung des Gehäuseschlittens auf der Führungseinheit bzw. der Traverse;
- Figur 3: zeigt einen Schnitt gemäß der Linie III - III aus Figur 1.

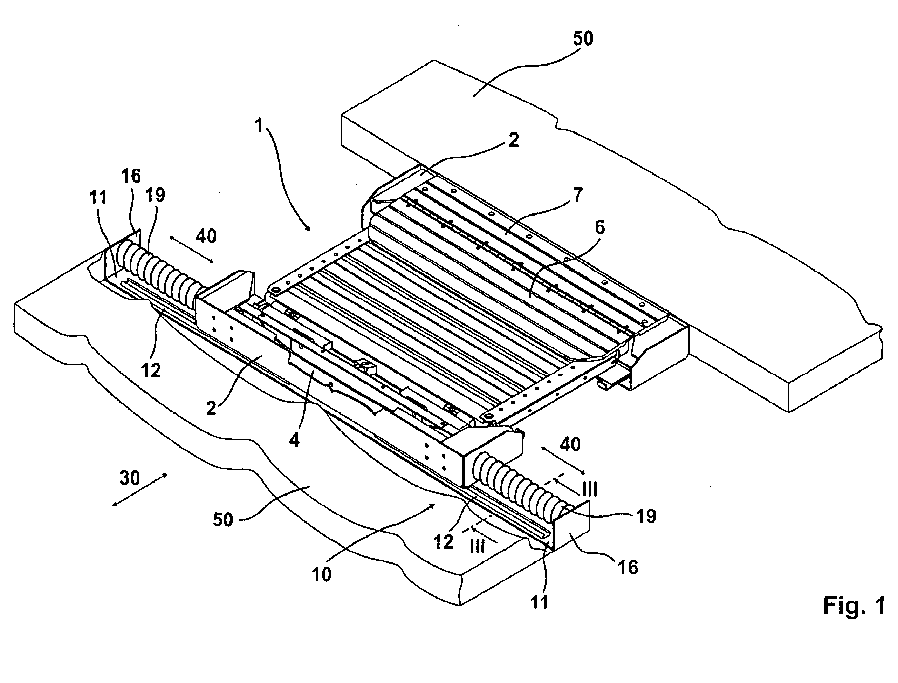

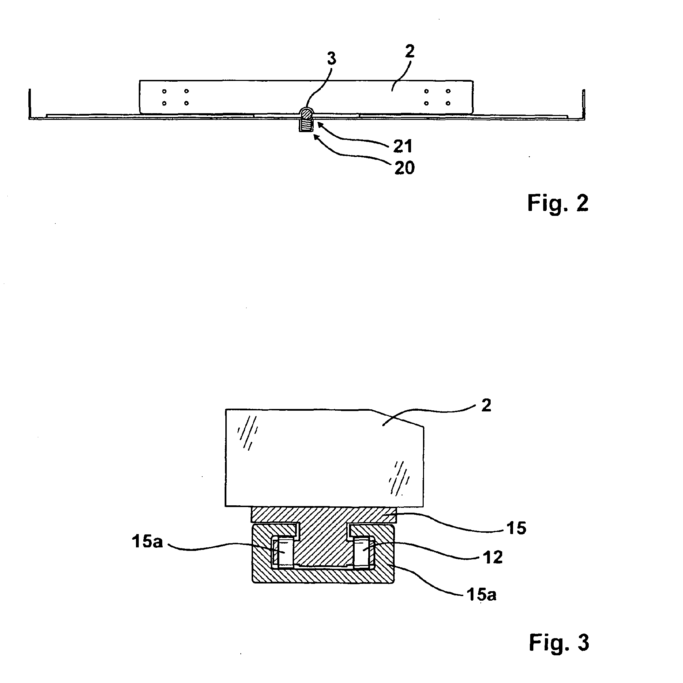

Gemäß Figur 1 ist die Gliederbrücke insgesamt mit 1 bezeichnet. Die Gliederbrücke 1 umfasst zu jeder Seite einen Gehäuseschlitten 2, wobei in dem Gehäuseschlitten die mit 1 bezeichnete Gliederbrücke in Richtung des Pfeils 30 in Längsrichtung der Fahrzeuge 50 beweglich aufgenommen ist. Die Gliederbrücke 1 stützt sich hierbei über eine Blattfeder 4 an der Wandung des Gehäuseschlittens ab. Im Übergang von der eigentlichen Gliederbrücke 1 zu dem Boden des Fahrzeugs ist ein verschwenkbares Brückenblech 6 vorgesehen, das in ein Übergangsblech 7 übergeht, was noch Teil des Gehäuseschlittens 2 ist. In der vorliegenden Ausführungsform ist der eine Gehäuseschlitten auf einer Führungseinheit 10 in Richtung des Doppelpfeils 40 beweglich gelagert. Der gegenüberliegende Gehäuseschlitten ist starr an der Stirnseite des Fahrzeugteils befestigt. Praktisch ist auch eine Ausführungsform möglich, bei der beide Gehäuseschlitten 2 jeweils auf einer Führungseinheit 10 quer zur Längsachse des Fahrzeugs verschieblich angeordnet sind. Die Führungseinheit 10 umfasst eine Traverse 11, auf der zwei parallel zueinander verlaufende schwalbenschwanzförmige Rollenschienen 12 angeordnet sind. Die Ausbildung einer solchen Rollenschiene ergibt sich aus Figur 3. Durch die Rollenschiene wird ein Rollenwagen 15 aufgenommen, auf dem der Gehäuseschlitten 2 lagert. Der Rollenwagen 15 umfasst zwei Rollen 15a, die innerhalb der schwalbenschwanzförmigen Schiene 12 beweglich gehalten sind. Die Traverse 11 besitzt eine Seitenwange 16, wobei zwischen der Seitenwange 16 und dem Gehäuseschlitten 2 eine Spiralfeder 19 angeordnet ist. Diese Spiralfeder 19 befindet sich zu jeder Seite des Gehäuseschlittens 2, wodurch sichergestellt ist, dass der Gehäuseschlitten nach einer Auslenkung immer in die Mittellage zurückgelangt. Das heißt, dass durch die Federn eine Zentrierung des Gehäuseschlittens etwa mittig zur Längsachse des Fahrzeugs vorgenommen wird.

Um nun sicherzustellen, dass nicht bei bereits kleinen, auf den Gehäuseschlitten 2 wirkenden Kräften zum Verschieben des Gehäuseschlittens der Gehäuseschlitten der anstehenden Kraft nachgibt, ist eine sogenannte Losbrecheinrichtung 20 vorgesehen. Die Losbrecheinrichtung 20 umfasst eine auf der Unterseite der Traverse gelagerte, federbelastete Kugel 21, die in eine entsprechende Aufnahme 3 in Form einer Aussparung auf der Unterseite des Gehäuseschlittens 2 eingreift. Durch die Einstellung der Kraft der Feder der Losbrecheinrichtung 20 ist festlegbar, bei welcher Seitenkraftkomponente auf den Schlitten, sich der Schlitten tatsächlich zur Seite entsprechend dem Doppelpfeil 40 verschiebt. Es wurde bereits an anderer Stelle erläutert, dass, wenn eine solche Gliederbrücke unmittelbar zwischen zwei Fahrzeugen angebracht wird, diese Gliederbrücke relativ kurz sein muss. Denn der Platz zwischen den zwei gelenkig miteinander verbundenen Fahrzeugen ist fest durch die Länge der Kupplungseinrichtung vorgegeben. Der mögliche Querversatz einer solchen relativ gesehen kurzen Brücke liegt bei etwa 30°. Dies ist - wie bereits ebenfalls ausgeführt - bei Durchfahren mancher S-Kurven wesentlich zu wenig, sodass dann, wenn die Gliederbrücke nicht abgekuppelt wird, die Gefahr bleibender Beschädigungen an der Gliederbrücke durch plastische Verformung besteht. Kann die Gliederbrücke mit ihrem Gehäuseschlitten 2 in die ein oder andere Richtung auf der Führungseinheit 10 ausweichen, so besteht nach wie vor die Möglichkeit, auch S-förmige Kurven zu durchlaufen, die eine Auslenkung der Gliederbrücke um mehr als 30° erforderlich machen, ohne dass die Gliederbrücke durch plastische Verformung bleibende Schäden davonträgt.

## Patentansprüche

1. Übergang mit einer Gliederbrücke (1) zwischen zwei gelenkig miteinander gekuppelten Fahrzeugen, wobei die Gliederbrücke (1) zu beiden Enden einen Gehäuseschlitten (2) aufweist, wobei mindestens einer der Gehäuseschlitten (2) quer zur Längsachse des Fahrzeugs (50) verschieblich durch das Fahrzeug aufnehmbar ist.

2. Übergang mit einer Gliederbrücke nach Anspruch 1,
**dadurch gekennzeichnet,**
**dass** zur verschieblichen Aufnahme des Gehäuseschlittens (2) eine an dem Fahrzeug (50) angeordnete Führungseinheit (10) vorgesehen ist.

3. Übergang mit einer Gliederbrücke nach einem der voranstehenden Ansprüche,
**dadurch gekennzeichnet,**
**dass** die Führungseinheit (10) mindestens eine, vorzugsweise zwei Rollenschienenführungen (12), umfasst.

4. Übergang mit einer Gliederbrücke nach einem der voranstehenden Ansprüche,
**dadurch gekennzeichnet,**
**dass** die mindestens eine Rollenschienenführung (12) auf einer am Fahrzeug (50) angeordneten Traverse (11) angeordnet ist.

5. Übergang mit einer Gliederbrücke nach einem der voranstehenden Ansprüche,
**dadurch gekennzeichnet,**
**dass** der Gehäuseschlitten (2) zu beiden Seiten durch Federelemente (19) zentrierbar ist.

6. Übergang mit einer Gliederbrücke nach einem der voranstehenden Ansprüche,
**dadurch gekennzeichnet,**
**dass** die Traverse (11) mit dem Gehäuseschlitten (2) durch eine Losbrecheinrichtung (20) in Verbindung steht.

7. Übergang mit einer Gliederbrücke nach einem der voranstehenden Ansprüche,
**dadurch gekennzeichnet,**
**dass** die Losbrecheinrichtung (20) ein federbelastetes Halteglied (21), z. B. eine Kugel oder einen Stift mit einem Kugelkopf umfasst, der in eine entsprechende Aufnahme (3) in dem Gehäuseschlitten () oder der Traverse () hineinragt.

8. Übergang mit einer Gliederbrücke nach einem der voranstehenden Ansprüche,
**dadurch gekennzeichnet,**
**dass** die Gliederbrücke (1) in dem Gehäuseschlitten (2) entgegen der Kraft einer Feder (4) parallel zur Längsachse beweglich gelagert ist.

9. Übergang mit einer Gliederbrücke nach einem der voranstehenden Ansprüche,
**dadurch gekennzeichnet,**
**dass** die Feder (4) als eine über die Gehäusebreite sich erstreckende Blattfeder ausgebildet ist.

## Claims

1. A gangway with an articulated bridge (1) between two vehicles coupled in an articulated manner, whereby the articulated bridge (1) has an enclosed carriage (2) at each end, whereby at least one enclosed carriage which can be displaced laterally in a direction perpendicular to the lengthwise axis of the vehicle (50) can be connected to the vehicle.

2. A gangway with an articulated bridge in accordance with claim 1, **characterized in that** for a displaceable connection of the enclosed carriage (2), a guidance unit (10) is provided on the vehicle (50).

3. A gangway with an articulated bridge in accordance with any of the preceding claims, **characterized in that** the guidance unit (10) contains at least one, preferably two, track assemblies (12).

4. A gangway with an articulated bridge in accordance with any of the preceding claims, **characterized in that** the, at least one, track assembly (12) is located on a cross beam (11) on the vehicle (50).

5. A gangway with an articulated bridge in accordance with any of the preceding claims, **characterized in that** the enclosed carriage (2) can be centered by means of spring elements (19) located on each side.

6. A gangway with an articulated bridge in accordance with any of the preceding claims, **characterized in that** the cross beam (11) is connected to the enclosed carriage (2) by means of a break-away device (20).

7. A gangway with an articulated bridge in accordance with any of the preceding claims, **characterized in that** the break-away device (20) is comprised of a spring loaded retention element, e.g. a sphere or a pin with a spherical head which rests in a corresponding seating (3) in the enclosed carriage (2) or in the cross beam (11).

8. A gangway with an articulated bridge in accordance with any of the preceding claims, **characterized in that** the articulated bridge (1) is anchored to the enclosed carriage (2) in opposition to the force of a spring (4) and is displaceable in a direction parallel to the lengthwise axis of the vehicle.

9. A gangway with an articulated bridge in accordance with any of the preceding claims, **characterized in that** the spring (4) is constructed as a leaf spring extending over the width of the housing.

## Revendications

1. Intercommunication avec pont à palettes (1) entre deux véhicules reliés l'un à l'autre de façon articulée, dans lequel le pont à palettes (1) comporte un chariot coffre (2) à ses deux extrémités, au moins un des chariots coffres (2) pouvant être logé dans le véhicule mobile en translation transversalement à l'axe longitudinal du véhicule (50).

2. Intercommunication avec pont à palettes selon la revendication 1,
**caractérisée en ce que**,
pour loger le chariot coffre (2) mobile en translation, il est prévu une unité de guidage (10) fixée au véhicule (50).

3. Intercommunication avec pont à palettes selon l'une des revendications précédentes,
**caractérisée en ce que**
l'unité de guidage (10) comprend au moins un, et de préférence deux guides à barre à rouleaux (12).

4. Intercommunication avec pont à palettes selon l'une des revendications précédentes,
**caractérisée en ce que**
l'au moins un guide à barres à rouleaux (12) est disposé sur une traverse (11) fixée au véhicule (50).

5. Intercommunication avec pont à palettes selon l'une des revendications précédentes,
**caractérisée en ce que**
le chariot coffre (2) peur être centré par rapport aux deux côtés par des éléments élastiques (19).

6. Intercommunication avec pont à palettes selon l'une des revendications précédentes,
**caractérisée en ce que**
la traverse (11) est reliée au chariot coffre (2) par un dispositif déverrouillable (20).

7. Intercommunication avec pont à palettes selon l'une des revendications précédentes,
**caractérisée en ce que**
le dispositif déverrouillable (20) comprend un organe d'arrêt (21) chargé par ressort, par exemple une bille ou une tige à tête sphérique, qui est engagé dans un logement correspondant (3) prévu dans le chariot coffre (2) ou dans la traverse (11).

8. Intercommunication avec pont à palettes selon l'une des revendications précédentes,
**caractérisée en ce que**
le pont à palettes (1) est monté mobile dans le chariot coffre (2) pour pouvoir se déplacer parallèlement à l'axe longitudinal à l'encontre de la force d'un ressort (4).

9. Intercommunication avec pont à palettes selon l'une des revendications précédentes,
**caractérisée en ce que**
le ressort (4) est constitué par un ressort lame s'étendant sur la largeur du coffre.
